# EUROPÄISCHE PATENTSCHRIFT

(11) **EP 1 210 248 B1**
(45) Veröffentlichungstag und Bekanntmachung des Hinweises auf die Patenterteilung: **28.02.2007**
(21) Anmeldenummer: 01949479.8
(22) Anmeldetag: 09.07.2001
(51) Int. Cl.: B60Q 1/14

(54) **VORRICHTUNG SOWIE VERFAHREN ZUR SELBSTTÄTIGEN ADAPTION EINER LICHTSENSORIK AN EINE WINDSCHUTZSCHEIBE**
DEVICE AND METHOD FOR AUTOMATICALLY ADAPTING A LIGHT SENSOR TO A WINDSCREEN
DISPOSITIF ET PROCEDE PERMETTANT L'ADAPTATION AUTOMATIQUE D'UN SYSTEME DE DETECTION LUMINEUSE A UN PARE-BRISE

(30) Priorität: 11.07.2000 DE 10033609
(43) Veröffentlichungstag der Anmeldung: 05.06.2002
(73) Patentinhaber: Leopold Kostal GmbH & Co. KG, 58507 Lüdenscheid (DE)
(72) Erfinder: WEBER, Thomas, 58509 Lüdenscheid (DE)
(86) Internationale Anmeldenummer: PCT/EP2001/007880
(87) Internationale Veröffentlichungsnummer: WO 2002/004248

(56) Entgegenhaltungen:
- EP-A- 0 869 044
- WO-A-01/05626
- DE-A- 3 532 199
- DE-A- 3 715 798

## Beschreibung

Die Erfindung betrifft eine Vorrichtung sowie ein Verfahren zur selbsttätigen Adaption einer einer automatischen Steuereinrichtung zum Ein- und Ausschalten von Beleuchtungseinrichtungen eines Kraftfahrzeugs zugeordneten, im Bereich der Windschutzscheibe des Kraftfahrzeugs angeordneten Lichtsensorik an die Lichttransmissionseigenschaften der Windschutzscheibe.

Eine Steuereinrichtung der betreffenden Art ist durch die DE 195 23 262 A1 bekannt. Dieser Steuereinrichtung zugeordnet ist eine Lichtsensorik, die einen Umgebungslichtsensor zur ungerichteten Erfassung der allgemeinen Lichtverhältnisse (Helligkeit) in der Umgebung des Kraftfahrzeugs sowie einen gerichtet die Lichtverhältnisse in Fahrtrichtung vor dem Fahrzeug erfassenden Richtungssensor aufweist. Die Lichtsensorik ist mit einer elektronischen Auswerteeinrichtung verbunden, die unter Berücksichtigung der Signale beider Sensoren und des aktuellen Schaltzustandes der Beleuchtungseinrichtungen ermittelt, ob eine Änderung von deren Schaltzustand erforderlich ist.
Durch diese bekannte Einrichtung ist das automatische Ein- und Ausschalten von Beleuchtungseinrichtungen eines Kraftfahrzeugs bei vielen Situationen mit sich ändernden Lichtverhältnissen - wie z.B. hereinbrechender Dämmerung oder auch längeren Tunneldurchfahrten - prinzipiell möglich.

Die der Steuereinrichtung zugeordnete Lichtsensorik befindet sich dabei hinter der Windschutzscheibe etwa im Bereich des Spiegelfußes des Rückspiegels. Diese Position ermöglicht zum einen eine durch das Fahrzeug selbst nur wenig beeinträchtigte Erfassung der Umgebungshelligkeit, zum anderen ist sie geradezu ideal zur Messung der richtungsspezifischen Helligkeit in Fahrtrichtung. Ein Nachteil dieser Position besteht darin, daß die von den einzelnen Sensoren empfangene Strahlung zuvor die Windschutzscheibe passieren muß und dort unter Umständen in ihrer Charakteristik verändert wird. Dies ist insbesondere bei den im Automobilbau z. Zt. in immer stärkerem Maße eingesetzten Wärmedämmgläsern der Fall, die durch Absorption bzw. Reflexion der Infrarotstrahlung bis in den sichtbaren Spektralbereich hinein die spektrale Zusammensetzung des Lichtes verändern, oder beim Einsatz sog. Farbkeile im oberen Scheibenbereich, die eine starke Filterwirkung im sichtbaren Spektralbereich aufweisen.

Der vorliegenden Erfindung liegt deshalb die Aufgabe zugrunde, eine Vorrichtung sowie ein Verfahren zur Verfügung zu stellen, die eine selbsttätige Adaption einer solchen Steuereinrichtung bzw. insbesondere der dieser zugeordneten Lichtsensorik an die Lichttransmissionseigenschaften der jeweiligen Windschutzscheibe ermöglicht.

Erfindungsgemäß wird diese Aufgabe durch einen die Merkmale des Hauptanspruchs aufweisenden Gegenstand sowie durch ein Verfahren nach dem nebengeordneten Verfahrensanspruch gelöst, indem die Transmissionseigenschaften der Windschutzscheibe bei zumindest zwei verschiedenen Wellenlängen ermittelt und mit bekannten Referenzwerten verglichen werden.

Weitere Ausgestaltungen und zweckmäßige Weiterbildungen der erfindungsgemäßen Vorrichtung sowie des zugehörigen Verfahrens sind in den zusätzlichen Unteransprüchen angegeben und gehen auch aus der nachfolgenden Beschreibung des in der Zeichnung dargestellten Ausführungsbeispiels hervor.
Dabei zeigen:
- **Fig. 1**: eine Schnittdarstellung der erfindungsgemäßen Vorrichtung
- **Fig. 2**: Transmissionscharakteristiken einer Klarglas- sowie einer Wärmedämmglasscheibe

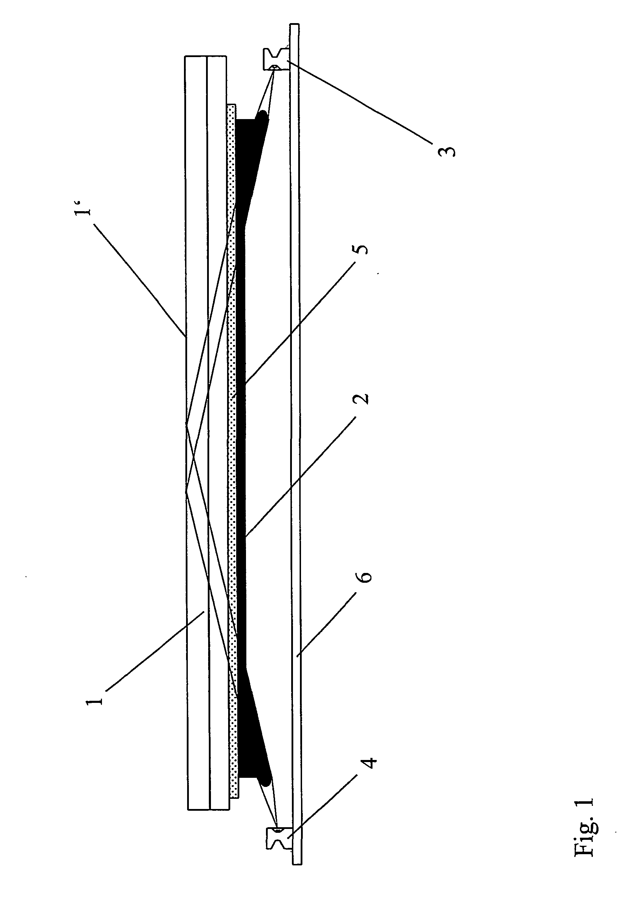

Wie aus Fig. 1 zu sehen ist, umfaßt die erfindungsgemäße Vorrichtung einen Strahlenleitkörper 2, der an der Innenseite der Windschutzscheibe 1 mittels einer transparenten Zwischenschicht 5, die z.B. als selbstklebende flexible Folie ausgeführt ist, optisch angekoppelt ist. Diesem Strahlenleitkörper 2 sind ein Strahlensender 4 sowie ein Strahlenempfänger 3 zugeordnet, die als SMD-Bauteile auf einer Leiterplatte 6 angebracht sind. Zumindest ein Teil des von dem Strahlensender 4 emittierten Strahlenbündels wird durch den Strahlenleitkörper 2 parallelisiert und unter einem so flachen Winkel in die Windschutzscheibe 1 eingekoppelt, daß eine Totalreflexion der Strahlung an der Außenseite der Scheibe 1 selbst dann erfolgt, wenn diese mit Feuchtigkeit benetzt ist. Das totalreflektierte Strahlenbündel wird durch den Strahlenleitkörper 2 wieder aus der Scheibe ausgekoppelt und auf den Strahlenempfänger 3 fokussiert. Als Strahlenempfänger 3 wird hierbei vorzugsweise ein Bauteil des gleichen Typs verwendet, wie er auch in einem Umgebungs- oder Vorauslichtsensor der der automatischen Steuereinrichtung zum Ein- und Ausschalten von Beleuchtungseinrichtungen zugeordneten Lichtsensorik eingesetzt ist. Unter Umständen ist sogar die Verwendung eines solchen vorhandenen Sensors anstelle eines zusätzlichen Strahlenempfängers 3 möglich, falls ein entsprechend ausgestalteter Strahlenleitkörper 2 in die bestehende Lichtsensorik integrierbar ist. Als Strahlensender 4 wird eine sogenannte RGB-Leuchtdiode eingesetzt, die wahlweise Lichtstrahlung einer der drei Wellenlängen λ₁ = 470 nm, λ₂ = 565 nm oder λ₃ = 625 nm abstrahlen kann.
Zur Adaption der Lichtsensorik an eine Windschutzscheibe 1 wird nach dem erfindungsgemäßen Verfahren z.B. bei einer ersten Inbetriebnahme der automatischen Steuereinrichtung zum Ein- und Ausschalten von Beleuchtungseinrichtungen durch den Strahlensender 4 nacheinander Licht der Wellenlängen λ₁ = 470 nm, λ₂ = 565 nm, oder λ₃ = 625 nm abgestrahlt und die dabei auf den Strahlenempfänger 3 jeweils einwirkenden Lichtintensitäten I₁, I₂, I₃ registriert. Diese gemessenen Lichtintensitäten werden z.B. durch einen Mikrocontroller mit in einem Speicherbaustein abgelegten Referenzwerten verglichen. Das Ergebnis dieses Vergleichs wird genutzt, um die Betriebsparameter der automatischen Steuereinrichtung sowie insbesondere der dieser zugeordneten Lichtsensorik entweder direkt zu beeinflussen, oder aber eine indirekte Beeinflussung dieser Betriebsparameter über den Zwischenschritt einer Identifizierung der jeweiligen Windschutzscheibe als eine bestimmte aus einer Reihe solcher mit bekannten, ebenfalls in dem Speicherbaustein abgelegten Eigenschaften vorzunehmen. Die zum Vergleich verwendeten, in dem Speicherbaustein abgelegten Referenzwerte der Lichtintensitäten I₁, I₂, I₃ werden vorzugsweise im Rahmen einer bei dem Herstellungsprozeß der Steuereinrichtung vorgesehenenen abschließenden Funktionsüberprüfung durch eine z.B. an einer Klarglasscheibe durchzuführenden Referenzmessung ermittelt. Dies hat gegenüber der Verwendung fest vorgegebener, für alle Einzelexemplare gleicher Referenzwerte den Vorteil, daß der Einfluß der mitunter großen Streuungen, die optoelektronische Sende- bzw. Empfangsbausteine hinsichtlich ihrer Intensitätsausbeute bzw. ihrer Empfindlichkeit aufweisen, durch diese Vorgehensweise weitgehend eliminiert ist.

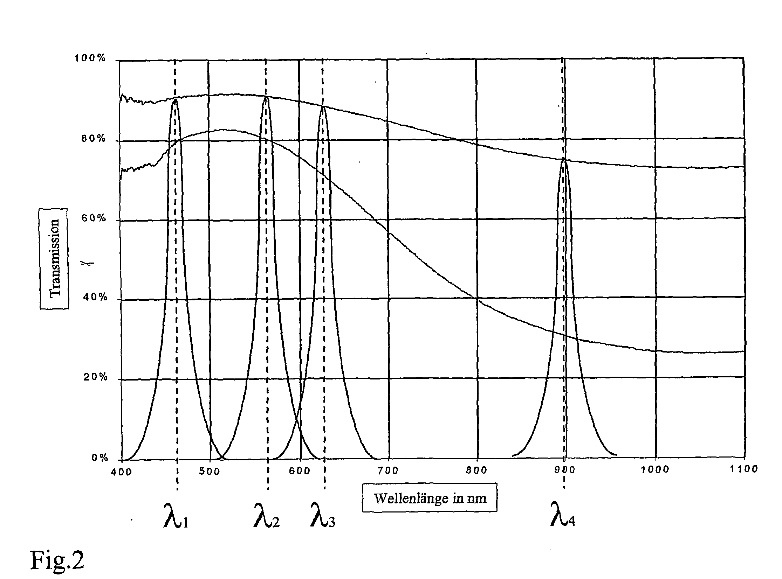

Fig. 2 zeigt beispielhaft die Transmissionswerte für eine Klarglas- und eine Wärmedämmglasscheibe in Abhängigkeit von der Wellenlänge der Strahlung für den sichtbaren und nahinfraroten Spektralbereich. Anhand der bei den Wellenlängen λ₁ = 470 nm, λ₂ = 565 nm, oder λ₃ = 625 nm durch eine erfindungsgemäße Vorrichtung zu ermittelnden Lichtintensitäten I₁, I₂, I₃ sind, wie ersichtlich, die beiden Scheibentypen deutlich voneinander zu unterscheiden. Falls an der Windschutzscheibe 1 ebenfalls ein nach einem ähnlichen optischen Funktionsprinzip im nahen infraroten Spektralbereich arbeitender Regensensor angebracht ist, so können ggf. auch durch diesen zu ermittelnde Transmissionswerte etwa bei einer weiteren Wellenlänge wie beispielsweise λ₄ = 895 nm zur Auswertung mit herangezogen werden.

Unter Umständen bietet das Vorhandensein eines Regensensors - insbesondere dann, wenn dieser mit der Lichtsensorik in einer Baueinheit integriert ist - die Möglichkeit, ganz auf einen eigenen Strahlenleitkörper für die erfindungsgemäße Vorrichtung zu verzichten, und den vorhandenen Strahlenleitkörper des Regensensors mit zu nutzen. Bei diesem ist zwar der Strahlengang so ausgelegt, daß bei einer Benetzung der Scheibe mit Feuchtigkeit eine Störung der Totalreflexion stattfindet, bei trockener Scheibe ist jedoch ohne weiteres eine Nutzung im Sinne der vorliegenden Erfindung möglich. Dazu ist es allerdings erforderlich, daß statt der üblicherweise für die Regensensorik eingesetzten, lediglich zur Abstrahlung von Licht einer einzigen Wellenlänge (üblicherweise im infraroten Spektralbereich) geeigneten Leuchtdioden solche zum Einsatz kommen, die Licht bei zumindest zwei verschiedenen Wellenlängen emittieren können, oder daß alternativ hierzu bei Vorhandensein mehrerer Regensensor-Strecken zumindest zwei dieser Strecken mit unterschiedlichen Wellenlängen betrieben werden. In einer bevorzugten Ausführungsform ist beispielsweise vorgesehen, mehrere Regensensor-Strecken jeweils mit Leuchtdioden mit einer unterschiedlichen Wellenlängen-Kombination auszustatten, z.B. eine Strecke "Infrarot und Rot", eine weitere Strecke "Infrarot und Grün" und eine Dritte Strecke "Infrarot und Blau". Mit diesen Kombinationen ist eine Funktion im Sinne der erfindungsgemäßen Vorrichtung unter Ausnutzung von vier verschiedenen Wellenlängen ermöglicht, wobei für die Regensensorfunktion jeweils nur die Infrarot-Komponente genutzt wird. In einer anderen Variante ist dagegen vorgesehen, daß eine von z.B. insgesamt vier Regensensor-Strecken statt mit infraroter Strahlung mit sichtbarem Licht arbeitet und dazu in einer bevorzugten Weiterbildung dieser Variante mit einer RGB-Leuchtdiode sowie einem dazu passenden Empfänger ausgestattet ist.

## Patentansprüche

1. Vorrichtung zur selbsttätigen Adaption einer einer automatischen Steuereinrichtung zum Ein- und Ausschalten von Beleuchtungseinrichtungen eines Kraftfahrzeugs zugeordneten, im Bereich der Windschutzscheibe (1) des Kraftfahrzeugs angeordneten Lichtsensorik an die Lichttransmissionseigenschaften der Windschutzscheibe (1), umfassend zumindest einen Strahlungsempfänger (3) und eine zum Aussenden von Strahlung bei zumindest zwei festgelegten Wellenlängen λₙ im sichtbaren und/oder infraroten Spektralbereich vorgesehene Strahlungsquelle (4), wobei der Strahlungsempfänger (3) der Strahlungsquelle (4) mittels eines Strahlenleitkörpers (2) derart zugeordnet ist, daß, wenn die Vorrichtung an einer Windschutzscheibe angebracht ist, die von der Strahlungsquelle (4) ausgesandte Strahlung den Strahlungsempfänger (3) über einen Weg erreicht, der eine Transmission durch die Windschutzscheibe (1) und zumindest eine Totalreflexion an deren Außenseite (1') umfaßt.

2. Vorrichtung nach Anspruch 1, **dadurch gekennzeichnet, daß** die Strahlungsquelle (4) durch eine zur Ausstrahlung von sichtbarem Licht bei drei verschiedenen Wellenlängen vorgesehenen RGB-Leuchtdiode gebildet ist.

3. Vorrichtung zur selbsttätigen Adaption einer einer automatischen Steuereinrichtung zum Ein- und Ausschalten von Beleuchtungseinrichtungen eines Kraftfahrzeugs zugeordneten, im Bereich der Windschutzscheibe (1) des Kraftfahrzeugs angeordneten Lichtsensorik an die Lichttransmissionseigenschaften der Windschutzscheibe (1), umfassend einen oder mehrere Strahlungsempfänger (3) und zumindest zwei zum Aussenden von Strahlung bei jeweils einer unterschiedlichen festgelegten Wellenlänge λₙ im sichtbaren und/oder infraroten Spektralbereich vorgesehene Strahlungsquellen (4), wobei der (die) Strahlungsempfänger (3) zumindest jeweils einer der Strahlungsquellen (4) mittels eines Strahlenleitkörpers (2) derart zugeordnet ist (sind), daß die von den Strahlungsquellen (4) ausgesandte Strahlung den (die) Strahlungsempfänger (3) über einen Weg erreicht, der eine Transmission durch die Windschutzscheibe (1) und zumindest eine Totalreflexion an deren Außenseite (1') umfaßt.

4. Vorrichtung nach einem der Ansprüche 1 bis 3, **dadurch gekennzeichnet, daß** der Strahlenleitkörper (2) mittels einer optisch transparenten Zwischenschicht (5) an der Windschutzscheibe (1) angekoppelt ist.

5. Vorrichtung nach einem der Ansprüche 1 bis 4, **dadurch gekennzeichnet, daß** die Anordnung der Strahlungsquelle(n) (4) des (der) Strahlungsempfänger(s) (3) und des Strahlenleitkörpers (2) einen Verlauf der Strahlung in der Windschutzscheibe (1) unter einem solchen Winkel bewirkt, bei dem auch bei Benetzung der Scheibenaußenseite (1') mit Feuchtigkeit eine Totalreflexion an dieser erfolgt.

6. Vorrichtung nach einem der Ansprüche 1 bis 4, **dadurch gekennzeichnet, daß** der Strahlenleitkörper (2) durch zumindest einen Teil eines für einen Regensensor genutzten Strahlenleitkörpers gebildet ist.

7. Vorrichtung nach Anspruch 6, **dadurch gekennzeichnet, daß** die Strahlungsquelle(n) (4) und der (die) Strahlungsempfänger (3) zur Nutzung für die Zwecke einer Regensensorik geeignet sind.

8. Vorrichtung nach Anspruch 7, **dadurch gekennzeichnet, daß** mehrere Strahlungsquellen (4) und Strahlungsempfänger (3) vorhanden sind, wobei die Strahlungsquellen (4) Strahlung jeweils unterschiedlicher Kombinationen zweier jeweils verschiedener Wellenlängen emittieren können.

9. Vorrichtung nach einem der Ansprüche 1 bis 5, **dadurch gekennzeichnet, daß** zumindest ein Strahlungsempfänger (3) durch einen der Lichtsensorik zugehörigen, zum Erfassen der Lichtverhältnisse (Helligkeit) in der Umgebung des Kraftfahrzeugs vorgesehenen Lichtempfänger gebildet ist.

10. Vorrichtung nach Anspruch 9, **dadurch gekennzeichnet, daß** die Strahlungsquelle(n) (4) zur Funktionsüberprüfung der Lichtsensorik im Einbauzustand herangezogen ist (sind).

11. Vorrichtung nach einem der Ansprüche 1 bis 10, **dadurch gekennzeichnet, daß** die Lichtsensorik einen gerichtet die Lichtverhältnisse in Fahrtrichtung vor dem Fahrzeug erfassenden Richtungssensor umfaßt.

12. Vorrichtung nach einem der Ansprüche 1 bis 11, **dadurch gekennzeichnet, daß** ein Speicherbaustein zur Speicherung von Referenzwerten sowie ein Mikrocontroller zur Durchführung von Verknüpfungs- und Vergeichsoperationen vorgesehen sind.

13. Verfahren zur selbsttätigen Adaption einer einer automatischen Steuereinrichtung zum Ein- und Ausschalten von Beleuchtungseinrichtungen eines Kraftfahrzeugs zugeordneten, im Bereich der Windschutzscheibe (1) des Kraftfahrzeugs angeordneten Lichtsensorik an die Lichttransmissionseigenschaften der Windschutzscheibe (1), wobei zumindest ein Strahlungsempfänger (3) und zumindest eine zum Aussenden von Strahlung vorgesehene Strahlungsquelle (4) vorhanden sind, die einander mittels eines Strahlenleitkörpers (2) derart zugeordnet ist, daß die von der Strahlungsquelle (4) ausgesandte Strahlung den Strahlungsempfänger (3) über einen Weg erreicht, der eine Transmission durch die Windschutzscheibe (1) beinhaltet, umfassend die Verfahrensschritte:
- Aussenden von Strahlung bei einer ersten Wellenlängen λ₁ durch eine Strahlungsquelle (4)
- Messung der **dadurch** auf den zugeordneten Strahlungsempfänger (3) einwirkenden Strahlungsintensität I₁
- Aussenden von Strahlung bei weiteren Wellenlängen λ₂, ..., λₙ durch (jeweils) eine Strahlungsquelle (4)
- Messung der **dadurch** auf den zugeordneten Strahlungsempfänger(n) (3) einwirkenden Strahlungsintensitäten I₂,..., Iₙ
- Vergleich der gemessenen Strahlungsintensitäten I₁, I₂, ..., Iₙ mit zuvor abgespeicherten Referenzwerten und Berechnung der Transmissionseigenschaften der Windschutzscheibe
- Beeinflussung der Betriebsparameter der Steuereinrichtung bzw. der Lichtsensorik in Abhängigkeit der ermittelten Transmissionseigenschaften

14. Verfahren nach Anspruch 13, **dadurch gekennzeichnet, daß** zur Beeinflussung der Betriebsparameter der Steuereinrichtung bzw. der Lichtsensorik aus den ermittelten Transmissionseigenschaften zunächst der vorhandene Scheibentyp ermittelt wird.

15. Verfahren nach Anspruch 13 oder 14, **dadurch gekennzeichnet, daß** die abgespeicherten Referenzwerte der Strahlungsintensitäten I₁,..., Iₙ durch eine an einer Klarglasscheibe durchgeführte Referenzmessung ermittelt werden.

## Claims

1. Facility for the automatic adaptation to the light transmitting properties of the windscreen (1) of a motor vehicle on the part of a light sensor system arranged in the vicinity of the windscreen (1) and assigned to an automatic control device for the purpose of switching lighting equipment of a motor vehicle on and off, which facility comprises at least one radiation receiver (3) and one radiation source (4) provided for emitting radiation on at least two fixed wavelengths λₙ in the visible and/or infrared spectral range, for which the radiation receiver (3) of the radiation source (4) is arranged by means of a beam conducting element (2) in such a manner that, when the facility is mounted on a windscreen, the radiation emitted by the radiation source (4) reaches the radiation receiver (3) by way of a path which incorporates one transmission through the windscreen (1) and at least one total reflection on the outer surface (1') of the same.

2. Facility in accordance with Claim 1, **characterised by** the fact that the radiation source (4) is made up of an RGB light diode provided for the purpose of radiating visible light on three different wavelengths.

3. Facility for the automatic adaptation to the light transmitting properties of the windscreen (1) of a motor vehicle on the part of a light sensor system arranged in the vicinity of the windscreen (1) and assigned to an automatic control device for the purpose of switching lighting equipment of a motor vehicle on and off, which facility comprises one or more radiation receivers (3) and at least two radiation sources (4) each provided for emitting radiation of a different fixed wavelength λₙ in the visible and/or infrared spectral range, with the radiation receiver or receivers (3) assigned, respectively, to one of the radiation sources (4) by means of a beam conducting element (2) in such a manner that the radiation emitted by the radiation sources (4) reaches the radiation receiver or receivers (3) by way of a path which incorporates one transmission through the windscreen (1) and at least one total reflection on the outer surface (1') of the same.

4. Facility in accordance with any of Claims 1 to 3, **characterised by** the fact that the beam conducting element (2) is coupled to the windscreen (1) by means of an optically transparent interlayer (5).

5. Facility in accordance with any of Claims 1 to 4, **characterised by** the fact that the arrangement of the radiation source or sources (4) of the radiation receiver or receivers (3) and of the beam conducting element (2) causes a waveform of the radiation in the windscreen (1) at such an angle at which a total reflection on the same occurs, even if the outer surface (1') of the screen is covered in moisture.

6. Facility in accordance with any of Claims 1 to 4, **characterised by** the fact that the beam conducting element (2) is formed by at least one part of a beam conducting element utilised for a rain sensor.

7. Facility in accordance with Claim 6, **characterised by** the fact that the radiation source or sources (4) and the radiation receiver or receivers (3) are suitable for implementation for the purposes of rain sensor technology.

8. Facility in accordance with Claim 7, **characterised by** the fact that several radiation sources (4) and radiation receivers (3) are provided, wherein each of the radiation sources (4) is capable of emitting different combinations of two different wavelengths, respectively.

9. Facility in accordance with any of Claims 1 to 5, **characterised by** the fact that at least one radiation receiver (3) is formed by an opto-receiver pertaining to the light sensor system and provided for detecting the lighting conditions (brightness) in the environment of the motor vehicle.

10. Facility in accordance with Claim 9, **characterised by** the fact that the radiation source or sources (4) is/are brought into play for the purpose of inspecting the function of the light sensor technology in its installation state.

11. Facility in accordance with any of Claims 1 to 10, **characterised by** the fact that the light sensor system encompasses a direction sensor that detects the lighting conditions in the direction of motion in front of the vehicle in a directional manner.

12. Facility in accordance with any of Claims 1 to 11, **characterised by** the fact that a memory module is provided for storing reference values and a microcontroller is provided for executing linkage and comparison operations.

13. Process for the automatic adaptation to the light transmitting properties of the windscreen (1) of a motor vehicle on the part of a light sensor system arranged in the vicinity of the windscreen (1) and assigned to an automatic control device for the purpose of switching lighting equipment of a motor vehicle on and off, with at least one radiation receiver (3) and at least one radiation source (4) for emitting radiation provided which are allocated to each other by means of a beam conducting element (2) in such a manner that the radiation emitted by the radiation source (4) reaches the radiation receiver (3) by way of a path which incorporates a transmission through the windscreen (1), comprising the following process steps:
- Emission by a radiation source (4) of radiation on a first wavelength λ₁;
- Measurement of the radiant intensity I₁ consequently acting on the assigned radiation receiver (3);
- Emission by one radiation source (4) of radiation on further wavelengths λ₂, ..., λₙ (per wavelength);
- Measurement of the radiant intensities λ₂, ..., λₙ acting on the assigned radiation receiver or receivers (3);
- Comparison of the measured radiant intensities λ₁, λ₂,..., λₙ with previously stored reference values and computation of the transmission properties of the windscreen;
- Influencing of the operating parameters of the control device or the light sensor system in dependence on the determined transmission properties.

14. Process in accordance with Claim 13, **characterised by** the fact that, in order to influence the operating parameters of the control device or the light sensor system, respectively, the existing screen type must first be ascertained on the basis of the detected transmission properties.

15. Process in accordance with either of Claims 13 or 14, **characterised by** the fact that the stored reference values for the radiant intensities I₁, ..., Iₙ are determined by a reference measurement conducted on a clear glass screen.

## Revendications

1. Dispositif pour adapter automatiquement aux propriétés de transmission de lumière du pare-brise (1) d'un véhicule automobile un système capteur de lumière qui, agencé dans le domaine du pare-brise (1) du véhicule automobile, est associé à un dispositif de commande automatique pour allumer et éteindre les dispositifs d'éclairage du véhicule automobile, comprenant au moins un récepteur de rayonnement (3) est une source de rayonnement (4), prévue pour l'émission de rayonnement pour au moins deux longueurs d'ondes déterminées λₙ dans le domaine spectral visible et / ou infrarouge, le récepteur de rayonnement (3) de la source de rayonnement (4) étant agencé au moyen d'un guide de lumière (2) de telle manière que, lorsque le dispositif est installé sur un pare-brise, le rayonnement émis par la source de rayonnement (4) atteint le récepteur de rayonnement (3) par un chemin qui comprend une transmission par le pare-brise (1) et au moins une réflexion totale sur la face extérieure (1') de celui-ci.

2. Dispositif selon la revendication 1, **caractérisé en ce que** la source de rayonnement (4) est formée par une diode électroluminescente RGB qui est prévue pour l'émission d'une lumière visible pour trois longueurs d'ondes différentes.

3. Dispositif pour adapter automatiquement aux propriétés de transmission de lumière du pare-brise (1) d'un véhicule automobile un système capteur de lumière qui, agencé dans le domaine du pare-brise (1) du véhicule automobile, est associé à un dispositif de commande automatique pour allumer et éteindre les dispositifs d'éclairage du véhicule automobile, comprenant un ou plusieurs récepteurs de rayonnement (3) et au moins deux sources de rayonnement (4) pour l'émission de rayonnement respectif pour une longueur d'onde différente λₙ fixée, dans le domaine spectral visible et / ou infrarouge, le / les récepteur/s de rayonnement (3) étant associé/s respectivement à l'une des sources de rayonnement (4) au moyen d'un guide de lumière (2) de sorte que le rayonnement émis par les sources de rayonnement (4) parvient au / aux récepteur/s de rayonnement (3) par un chemin qui comprend une transmission par le pare-brise (1) et au moins une réflexion totale sur la face extérieure (1') de celui-ci.

4. Dispositif selon l'une des revendications 1 à 3, **caractérisé en ce que** le guide de lumière (2) est couplé au pare-brise (1) au moyen d'un intercalaire (5) optiquement transparent.

5. Dispositif selon l'une des revendications 1 à 4, **caractérisé en ce que**, l'agencement de la (des) source(s) de rayonnement (4) du récepteur de rayonnement (3) et du guide de lumière (2) donne lieu à une évolution du rayonnement dans le pare-brise (1) sous un angle tel qu'une réflexion totale a lieu même lorsque la face extérieure (1') du pare-brise est humide.

6. Dispositif selon l'une des revendications 1 à 4, **caractérisé en ce que** le guide de lumière (2) est formé au moins par une partie d'un guide de rayonnement utilisé pour un capteur de pluie.

7. Dispositif selon la revendication 6, **caractérisé en ce que** la (les) source(s) de rayonnement (4) et le (les) récepteur(s) de rayonnement (3) sont appropriés aux buts d'utilisation d'un capteur de pluie.

8. Dispositif selon la revendication 7, **caractérisé en ce que** plusieurs sources de rayonnement (4) et plusieurs récepteurs de rayonnement (3) sont prévus, les sources de rayonnement (4) pouvant émettre un rayonnement de différentes combinaisons de deux longueurs d'ondes respectivement différentes.

9. Dispositif selon l'une des revendications 1 à 5, **caractérisé en ce que** au moins un récepteur de rayonnement (3) est formé par le récepteur de lumière associé au système capteur de lumière, prévu pour capter les conditions d'éclairage (clarté) ambiant dans l'environnement du véhicule automobile.

10. Dispositif selon la revendication 9, **caractérisé en ce que** la (les) source(s) de rayonnement (4) est (sont) mise(s) à contribution pour contrôler le fonctionnement du système capteur de lumière à l'état monté.

11. Dispositif selon l'une des revendications 1 à 10, **caractérisé en ce que** le système capteur de lumière comprend un capteur directionnel dirigé qui détermine les conditions de clarté dans la direction de déplacement du véhicule automobile.

12. Dispositif selon l'une des revendications 1 à 11, **caractérisé en ce que** sont prévus un module de mémorisation pour la mémorisation de valeurs de référence ainsi qu'un microcontrôleur pour la réalisation d'opérations d'enchaînement et de comparaison.

13. Procédé pour adapter automatiquement aux propriétés de transmission de lumière du pare-brise (1) un système capteur de lumière qui, agencé dans le domaine du pare-brise (1) d'un véhicule automobile, est associé à un dispositif de commande automatique pour allumer et éteindre les dispositifs d'éclairage du véhicule automobile, au moins un récepteur de rayonnement (3) et au moins une source de rayonnement (4) pour l'émission du rayonnement étant prévus, lesquels sont associés l'un à l'autre au moyen d'un guide de lumière (2) de telle manière que le rayonnement émis par la source de rayonnement (4) parvient au récepteur de rayonnement (3) par un chemin qui comprend une transmission par le pare-brise (1), ledit procédé comprenant les étapes suivantes :
- émission de rayonnement à une première longueur d'ondes λ₁ par une source de rayonnement (4),
- mesures de l'intensité de rayonnement I₁ agissant ainsi sur le récepteur de rayonnement (3) associé,
- émission de rayonnement à d'autres longueurs d'ondes λ₂, ... λₙ par (respectivement) une source de rayonnement (4),
- mesure des intensités de rayonnement I₂, ..., Iₙ agissant ainsi sur le récepteur de rayonnement (3) associé,
- comparaison des intensités de rayonnement mesurées I₁, I₂, ..., Iₙ avec les valeurs de référence mémorisées précédemment, et détermination des propriétés de transmission du pare-brise
- ajustage des paramètres de service du dispositif de commande, respectivement du système capteur de lumière, en fonction des propriétés de transmission déterminées.

14. Procédé selon la revendication 13, **caractérisé en ce que**, pour ajuster les paramètres de service du dispositif de commande, respectivement du système capteur de lumière, c'est le type de vitre existant qui est d'abord déterminé parmi les propriétés de transmission à déterminer.

15. Procédé selon revendication 13 ou 14, **caractérisé en ce que**, les valeurs de référence des intensités lumineuses I₁, ..., Iₙ mémorisées sont déterminées par une mesure de référence exécutée sur une vitre en verre transparent ordinaire.
